# EUROPEAN PATENT APPLICATION

(11) **EP 1 059 273 A1**
(43) Date of publication of application: **13.12.2000**
(21) Application number: 00201984.2
(22) Date of filing: 06.06.2000
(51) Int. Cl.: C04B 28/06, C04B 18/04

(54) **Method for manufacturing a product from mineral wastes and mortar obtained with such method**

(30) Priority: 07.06.1999 NL 1012253
(71) Applicant: NV Afvalzorg Holding, 2012 JJ Haarlem (NL)
(72) Inventor: Kuhn, Maximiliaan Michael Henricus Maria, 2253 RG Voorschoten (NL); Vogels, Roland Jacobus Martinus Josephus, 6121 ZD Born (NL)
(74) Representative: Van Breda, Jacobus

(57) **Abstract**

The invention relates to a method of manufacturing a product derived from mineral waste, which product is usable, for example, in the construction industry, in which method the mineral waste is mixed with calcium aluminate cement and water, producing an ettringite-forming mortar, wherein
a) the anion content in the mineral waste is compared with a predetermined value, and in the event of said value being exceeded, a wash treatment is performed at a pH higher than approximately 10;
b) after the optional wash treatment the mineral waste, the calcium aluminate cement, and the water are mixed with a standard cement;
c) subsequently the ensuing mixture is allowed to set.

## Description

The present invention relates to a method of manufacturing a product derived from mineral waste, which product is usable, for example, in the construction industry, in which method the mineral waste is mixed with calcium aluminate cement and water, producing an ettringite-forming mortar.

Such mineral waste occurs in filter cakes from physicochemical waste-water purification plants and in fly ashes and waste-gas purification residues resulting from thermal (conversion) processes, such as the incineration of waste products in waste incineration plants. The reuse of such products requires special measures in order to combat the leaching out of heavy metals, anions, and oxyanions. In the prior art calcium aluminate cement is used for this purpose.

However, a considerable disadvantage of using calcium aluminate cement is the high cost price of the product.

It is the object of the present invention to provide a cheaper method of processing mineral waste from said waste streams into a product that is usable in the construction industry.

In accordance with the present invention this object is realized by a method according to the preamble, wherein
a) the anion content in the mineral waste is compared with a predetermined value, and that in the event of said value being exceeded, a wash treatment is performed at a pH higher than approximately 10;
b) after the optional wash treatment the mineral waste, the calcium aluminate cement, and the water are mixed with a standard cement;
c) followed by allowing the ensuing mixture to set.

The method according to the invention provides a concrete product acceptable in the construction industry, having a high mechanical strength, wherein the heavy metals present in the waste products are bound in such a manner that there is no evident leaching out, or in the worst case that it is limited to below the requirements laid down by the government.

Another advantage according to the invention is that immobilization (by means of chemical bonding) of the heavy metals present in the waste products can take place at ambient temperature, which is favourable with a view to energy consumption.

The standard cement takes over a number of functions from the calcium aluminate cement, such as gaining sufficient compression strength after setting, and creating the alkaline environment in the set mortar.

The purpose of the optional wash treatment is to reduce the chloride content to acceptable values; if the starting material already meets this requirement, the wash treatment may be omitted.

According to a further aspect of the invention, the chloride content of the mineral waste is reduced in the optional wash treatment to a value below 5,000 mg/kg dry matter, preferably below 2,000 mg/kg dry matter. This guarantees that the mortar will set and that it will remain stable in respect to leaching when submerged in water.

This prevents the heavy metals present in the waste products from ending up in the wash water and thus preventing them from becoming immobilized. In order to raise the pH to above 10, for example to 12, lime may be used.

In correspondence to a further feature of the method according to the invention, the waste products are reduced during or before the optional wash treatment to particles of a size smaller than 200 mm, for example, smaller than 30 mm.

This facilitates the elimination of water-soluble salts from the waste products.

In correspondence with a preferred embodiment of the method according to the invention, the optional wash treatment is performed in a substantially CO₂-free atmosphere.

This prevents calcium ions present in the resulting aqueous salt solutions due to their reacting with CO₂ present in the air from precipitating in the form of calcium carbonate, which would cause process-technical problems (scaling).

In correspondence with a preferred embodiment of the method according to the invention, the standard cement used in step b) is Portland or blast furnace slag cement, or a mixture thereof. These cements are generally available and can therefore be obtained cheaply.

In correspondence with a further feature of the method according to the invention, the amount of water added when mixing the waste products in step b) is such as to result in a water/cement factor (w/c factor) in the range of 0.5 to 2.00, such as for example, 1.60.

In correspondence with a further feature according to the invention, fly ash is added when mixing the waste products in step b). In the present application fly ash means the fly ash resulting in thermal (conversion) processes.

It has been shown, that such fly ash may be used as standard-cement substitute in an amount of up to approximately 50% of the total cement required, which means a further saving in costs. As a rule of thumb one can say that in the case of 5% fly ash being present, the standard-cement content may be reduced by approximately 2%. Preferably the fly ash is washed, whereby the chloride content or the anion content in said fly ash, to suit the needs, is reduced to below 5,000 or even 2,000 mg/kg dry matter.

In correspondence with another feature according to the present invention a dye is added when mixing the waste products in step b).

This provides an optical stability.

In correspondence with a yet another feature according to the present invention a plasticizing agent is added when mixing the waste products in step b).

The incorporation of a plasticizing agent improves the workability of the mixture (mortar before setting). This will finally result in a more compactly set product (higher density) and greater compression strength, and this has a positive effect on the leachability of the immobilisate. Moreover, the use of a plasticizing agent reduces the amount of water the mixture requires.

In correspondence to yet a further feature according to the invention an aggregate is added when mixing the waste products in step b), preferably selected from the group comprising sand, calcite, alpha quarts, bassinite, gypsum, anhydrite, fluorite, haematite and/or graphite.

The addition of an aggregate improves the physical properties (among other things a balanced granular construction) of the mixture and makes it possible to adjust the characteristics of the final concrete-like end product. It is also possible to add, for example, 1-2% of activated charcoal or sodium sulphide to improve the immobilization capacity.

In correspondence with a preferred embodiment of the method according to the invention, the calcium aluminate cement in step b) is added to the mixture in an amount of at most 12%, related to the amount of dry matter of the waste products, and in step b) an amount of
20-120% of standard cement,
0-0.3% of plasticizing agent, and
0-100% of aggregate
in relation to the dry matter content of the waste products is added to the mixture.

In step b) of a typical preferred embodiment of the method according to the invention
67.5% of standard cement,
0.1% of plasticizing agent,
40% of aggregate, and
7.5% of calcium aluminate cement in relation to the dry matter content of the waste products are added.

The present invention also relates to a mortar obtained in step b) of the method according to the invention. In the (optional) wash treatment according to the invention the waste products to be treated are brought into suspension by the addition of water. The water that is added to the waste products in order to bring the same into suspension, may be obtained from various sources. For example, tap water, mineral water and brackish surface water may be used. After the suspension has reached the desired composition, the suspension is fed to a dewatering plant. Here the suspension is dewatered, whereby an aqueous solution of water-soluble salts is obtained and a cuttable moist cake of waste salts, the so-called wash residue. There are different ways of dewatering, for example, by filtering over a filter strip or by means of a chamber filter press, or by using a decanting centrifuge. To improve the filtration quality, an adjuvant may be added such as, for example, a polyelectrolyte. As already mentioned, the objective of bringing the waste products into aqueous suspension is to eliminate soluble salts, in particular the chloride salts that are present in the waste products. The wash treatment is carried out such as to require a minimum amount of water.

## Claims

1. A method of manufacturing a product derived from mineral waste, which product is usable, for example, in the construction industry, in which method the mineral waste is mixed with calcium aluminate cement and water, producing an ettringite-forming mortar, **characterized** in that
a) the anion content in the mineral waste is compared with a predetermined value, and that in the event of said value being exceeded, a wash treatment is performed at a pH higher than approximately 10;
b) after the optional wash treatment the mineral waste, the calcium aluminate cement, and the water are mixed with a standard cement;
c) followed by allowing the ensuing mixture to set.

2. A method according to claim 1, **characterized** in that the chloride content of the mineral waste is reduced in the optional wash treatment to a value below 5,000 mg/kg dry matter.

3. A method according to claim 2, **characterized** in that the chloride content is reduced to a value below 2,000 mg/kg dry matter.

4. A method according to one of the preceding claims, **characterized** in that the waste products are reduced during or before the optional wash treatment to particles of a size smaller than 200 mm.

5. A method according to one of the preceding claims, **characterized** in that the optional wash treatment is performed in a substantially CO₂-free atmosphere.

6. A method according to one of the preceding claims, **characterized** in that the standard cement used in step b) is Portland or blast furnace slag cement, or a mixture thereof.

7. A method according to one of the preceding claims, **characterized** in that the amount of water added when mixing the waste products in step b) is such as to result in a water/cement factor (w/c factor) in the range of 0.5 to 2.00.

8. A method according to one of the preceding claims, **characterized** in that fly ash is added when mixing the waste products in step b).

9. A method according to one of the preceding claims, **characterized** in that before being mixed with the waste products, the fly ash is washed.

10. A method according to one of the preceding claims, **characterized** in that a dye is added when mixing the waste products in step b).

11. A method according to one of the preceding claims, **characterized** in that a plasticizing agent is added when mixing the waste products in step b).

12. A method according to one of the preceding claims, **characterized** in that an aggregate is added when mixing the waste products in step b).

13. A method according to claim 12, **characterized** in that the aggregate is selected from the group comprising sand, calcite, alpha quarts, bassinite, gypsum, anhydrite, fluorite, haematite and/or graphite.

14. A method according to one of the preceding claims, **characterized** in that the calcium aluminate cement in step b) is added to the mixture in an amount of at most 12%, related to the dry matter content of the waste products.

15. A method according to claim 14, **characterized** in that in step b) an amount of
20-120% of standard cement,
0-0.3% of plasticizing agent, and
0-100% of aggregate
in relation to the dry matter content of the waste products is added to the mixture.

16. A method according to claim 14 or 15, **characterized** in that in step b) an amount of
67.5% of standard cement,
0.1% of plasticizing agent,
40 % of aggregate, and
7.5% of calcium aluminate cement
in relation to the dry matter content of the waste products are added.

17. A mortar obtained in step b) of the method according to one of the preceding claims.
